(19) Europäisches Patentamt
European Patent Office
Office européen des brevets

(11) EP 0 929 357 B1

(12) EUROPEAN PATENT SPECIFICATION

(45) Date of publication and mention of the grant of the patent:
**27.03.2002 Bulletin 2002/13**

(21) Application number: **97944900.6**

(22) Date of filing: **26.09.1997**

(51) Int Cl.[7]: **B01D 53/22**, B01D 53/14

(86) International application number:
**PCT/EP97/05293**

(87) International publication number:
**WO 98/13124 (02.04.1998 Gazette 1998/13)**

# (54) SEPARATION OF GASEOUS COMPONENTS FROM A GAS STREAM WITH A LIQUID ABSORBENT

ABSCHEIDUNG VON GASFÖRMIGEN BESTANDTEILEN AUS EINEM GASSTROM MIT EINEM FLÜSSIGEN ABSORBENS

SEPARATION DE COMPOSANTS GAZEUX D'UN FLUX DE GAZ A L'AIDE D'UN ABSORBANT LIQUIDE

(84) Designated Contracting States:
**DE DK FR GB NL**

(30) Priority: **27.09.1996 DE 19639965**
**06.02.1997 DE 19704508**

(43) Date of publication of application:
**21.07.1999 Bulletin 1999/29**

(73) Proprietor: **W.L. GORE & ASSOCIATES GmbH**
**85640 Putzbrunn (DE)**

(72) Inventors:
- **WITZKO, Richard**
  **D-85521 Ottobrunn (DE)**
- **BIER, Christian**
  **D-83623 Dietramszell (DE)**

(74) Representative: **Klunker . Schmitt-Nilson . Hirsch**
**Winzererstrasse 106**
**80797 München (DE)**

(56) References cited:
**EP-A- 0 451 715**
**EP-A- 0 634 204**
**WO-A-90/15662**
**WO-A-95/21683**
**WO-A-95/26225**
**US-A- 3 953 566**
**US-A- 4 147 754**
**US-A- 5 281 254**
**US-A- 5 288 304**

- **DATABASE WPI Week 9434 Derwent Publications Ltd., London, GB; AN 94-275928 XP002055061 & JP 06 206 985 A (NIPPON GOSEI GOMU KK) , 26 July 1994**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 929 357 B1

## Description

The invention generally pertains to the area of gas separation with a liquid absorbent. In particular, the invention pertains to a process for the separation of one or more gaseous components from a gas stream using a liquid absorbent. It also pertains to a process for desorbing a gas component from the absorbent. Finally, the invention pertains to an apparatus for absorbing a gaseous component from a gas stream and an apparatus for desorbing a gas component from the absorbent.

## Background of the Invention

The invention generally pertains to the area of gas separation from a gas stream with a liquid absorbent. An example of such separation is the purification of waste gas or natural gas, by removing or reducing the amount of for example $CO_2$ or $SO_2$.

A process for gas separation that is widely used utilizes the so-called packed-bed method. This involves the use of containers with a built in bed of filling elements which, for example, have a separation liquid flowing through from the top to the bottom, with the gas mixture flowing through simultaneously in the opposite direction. The gas component from the gas mixture that is to be separated reacts with the separation liquid in the area of the bed of filling elements and is led out of the container together with this liquid. The gas that escapes from the top of the container contains a reduced amount of the designated gas component; ideally no longer containing any amount of the separated gas component at all.

A disadvantage of the use of such packed beds is their large size and weight. Furthermore, control of the separation process is relatively expensive and difficult. In addition, considerable investment costs form an obstacle to the construction of plants with packed beds.

More recent research and development work in the domain of gas separation has been directed toward the use of membranes.

WO-A-95/26 225 (Jansen, Feron) discloses a method for the separation of one or more gaseous components from a gas stream in that the gas stream is brought into contact with the liquid phase wherein the gas stream and the liquid phase are separated by a hydrophobic membrane. WO -A-95/26 225 (Jansen, Feron) further discloses that such membranes tend to exhibit leakage. As a solution to the problem of leakage of liquid absorbent to the gas side, the proposal is made in this publication that use should be made of a liquid absorbent which cannot penetrate the membrane. The liquid absorbent that satisfies this requirement has a surface tension that amounts to more than 60 x $10^{-3}$ N/m at 20°C. According to WO-A-95/26225 (Jansen, Feron), the focal point in the desired avoidance of leakage of a liquid absorbent to the gas side therefore resides in the selection of the separation liquid.

Especially in the case of low surface tension of the liquid absorbent, a liquid permeation has been observed to arise immediately after contact of the membrane with the liquid in question. Through intensive research the inventors of the present invention nevertheless found that the liquid permeation of the liquid absorbent to the gas side in the case of such microporous membranes is a function of the contacting time and on the pressure of the liquid absorbent. It can be deduced from this that the surface tension is certainly not solely decisive for the permeation of liquid through the membrane. There is evidence that other parameters also play an important part, e.g. pore geometry and the applied absorbent liquid pressure.

US-A-5.281.254 discloses a method and system for the absorption of $CO_2$ from a gaseous stream in a liquid amine based sorbent whereby the gas stream and the liquid stream are separated by a composite membrane comprising a thin film composite on a porous membrane. The amine based liquid can subsequently transport the absorbed $CO_2$ to a desorption stage.

P.H.M. Feron and A.E. Jansen disclose in their paper "Capture of Carbon Dioxide using Membrane Gas Separation and Re-Use in the Horticultural Industry" published in "Proceedings of the Second International Conference on Carbon Dioxide Removal", Kyoto 24-27 October 1994, Elsevier Science Ltd., 1995 that commercially available porous polyolefin membranes appear not to be suitable for operation with the usual separation liquid, i.e. aqueous solutions of monoethanolamine. In the course of time the liquid will seep through these membranes.

Matsumoto M., Kitamura H., Kamata T., Ishibashi M., Nishikawa N., (1992) "Fundamental Study on $CO_2$ Removal from the Flue Gas of Thermal Power Plant by Hollow-Fiber Gas-Liquid Contactor." Reprints, 1st Sep. Div. Tropical Conf. AIChE, Miami Beach FL, Nov. 2-6 (also published in the above cited Conference Proceedings Papers) describe the use of hollow fibre membranes in the removal of $CO_2$ from flue gases using a liquid absorbent, with the aim of reducing module size and testing membrane stability and durability. The membranes tested consisted of microporous membranes on the one hand and composite membranes on the other hand. The composite membranes were made up of three layer constructions, with a polyurethane or a silicone rubber layer sandwiched between two polyethylene microporous membranes and a two layer construction consisting of a polypropylene microporous membrane coated with polydimethylsiloxane (PDMS). The mass transfer coefficient for the transfer of $CO_2$ was calculated for each

membrane. The mass transfer coefficient of the composite membranes was found to be approximately one tenth of that of the microporous membranes. The authors concluded that this meant that composite membranes, both three-layer and coated types, are difficult to adopt for the purpose of separating $CO_2$ from flue gases.

Although Matsumoto does not experience wetting of the "pure" microporous membrane structures for 6600 hours, this is felt to be due to the fact that since the experiments were carried out in the laboratory with no or extremely low pressures of liquid absorbent applied. In practice much higher pressures are relevant and liquid permeation occurs as a function of exposure time (periods ranging between a few days and several weeks) of the membranes.

**Summary of the Invention**

The first object of the invention is to provide a process for the separation of gaseous components from a gas stream, using a liquid absorbent, whereby the process ensures stable operating conditions for long-term operation, i. e. that no absorbent permeation in the liquid state occurs by using the present construction for separation of the gas stream from the liquid absorbent.

A second object is to provide a process, wherein an adequate mass transfer or permeability of the gaseous components to be separated is achieved.

A further object of the invention is to provide for a process for the desorption of a gas component from the liquid absorbent.

It is a final object of the invention to provide for an apparatus for separating a gaseous component from a gas stream and an apparatus for the desorption of a gas component from the liquid absorbent.

According to a first aspect of the invention, a process for the separation of one or more gaseous components from a gas stream is provided in which the gas stream is brought into contact with a layer arrangement on a first side and the liquid absorbent is in contact with a second side opposite to said first side, wherein said layer arrangement has a dense polymeric coating layer with a fractional free volume in the range of 20 - 45% on a porous carrier layer.

A second aspect of the invention provides for a process for the desorption of a gas component from a liquid absorbent in which the liquid absorbent is brought into contact with a layer arrangement on a first side and the gas stream is in contact with a second side opposite to said first side, wherein said layer arrangement has a dense polymeric coating layer with a fractional free volume in the range of 20 - 45% on a porous carrier layer and in which heat energy is supplied to the liquid absorbent at least in the vicinity of the layer arrangement.

A third aspect of the invention covers an apparatus for the separation of one or more gaseous components from a gas stream, comprising a housing containing at least:

a) a gas inlet,
b) a gas outlet,
c) an absorbent inlet,
d) an absorbent outlet, and
e) a layer arrangement having a dense polymeric coating layer with a fractional free volume in the range of 20 - 45% on a porous carrier layer

A final aspect of the invention provides for an apparatus for the desorption of a gas component from a liquid absorbent, comprising a housing containing at least:

a) an absorbent inlet,
b) an absorbent outlet,
c) a gas outlet,
d) a device for the supply of heat to the absorbent,
e) a layer arrangement having a dense polymeric coating layer with a fractional free volume in the range of 20 - 45% on a porous carrier layer

Such apparati are coupled together to give a circuit for absorption and desorption of gaseous components.

**Detailed Description of the Invention**

According to the first aspect of the invention, a process for the separation of one or more gaseous components from a gas stream is provided wherein a particular layer arrangement is used to separate the gas stream from the liquid phase in such a way that liquid permeation of the liquid absorbent to the gas side is prevented on a long-term basis. This is achieved by using a layer arrangement wherein said layer arrangement has a dense polymeric coating layer on a porous carrier layer. The dense polymeric coating layer acts as a barrier to the entrance of liquid absorbent.

As a result of this, it is possible to use virtually any separation liquid, including those with surface tensions of less than e.g. 60 x $10^{-3}$ N/m at 20°C. The dense polymeric coating layer may be on either side of the carrier layer, but preferably faces the liquid absorbent.

The polymeric coating layer according to the invention forms a "dense layer" in contradiction to the "porous" carrier layer. As a "dense layer" is meant a layer which prevents the passage of liquid absorbent into and through the porous carrier layer but allows gaseous components to pass through in an adequate quantity as will be demonstrated below. This is due to the fact that the polymeric coating layer i.e. the "dense layer" has a fractional free volume in the range of 20 - 45%.

The free volume V is that fraction of the polymer volume which is not occupied by the polymer substrate. The specific free volume (SFV) (free volume/g of polymer) and the fractional free volume (FFV) (free volumel $cm^3$ of polymer) are commonly used as measures for the free volume potentially available for gas transport. The free volume available per unit mass in a polymer structure controls the rate of gas diffusion and, hence, its rate of permeation.

$$SFV = v_{sp} - v_0 = v_{sp} - 1.3v_w$$

$$FFV=SFV/v_{sp}$$

where $v_{sp}$ is the specific volume ($cm^3$ /g) of the polymer as determined from density or thermal expansion measurements, and $v_0$ is the zero point volume at 0 K. The van der Waals volume $v_w$ is calculated using the group contribution method of Bondi (D.W. van Krevelen, Properties of Polymers, 3rd ed., Elsevier, Amsterdam, 1990, pp. 71 -76).

In a particular embodiment of the invention the dense polymeric coating layer is a perfluorodioxole copolymer. In a preferred embodiment the perfluorodioxole copolymer is of the general structure:

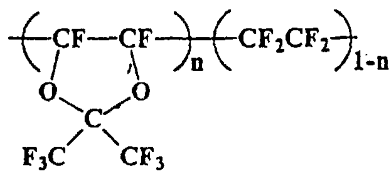

comprising 2,2-bis-trifluoromethyl-4,5-difluoro-1,3-dioxole (PDD) and tetrafluoroethylene (TFE) monomers.

The fractional free volume depends on the number of PDD and TFE monomers in the polymer structure. For example, if the number of 2,2-bis-trifluoromethyl-4,5-difluoro-1,3-dioxole (PDD) monomers n is chosen to be 0.9, the fractional free volume is 37.4%. If n is 0.65 the fractional free volume is 32.0%.

In the most preferred embodiment the dense polymeric coating layer consists of 87mol% 2,2-bis-trifluoromethyl-4,5-difluoro-1,3-dioxole (PDD) and 13mol% polytetrafluoroethylene (PTFE). This copolymer has a fractional free volume of 32.7%. It is an amorphous glassy polymer, commercially available from Dupont, Wilmington, DE, USA under the trade mark Teflon AF 2400.

A further perfluorodioxole copolymer is for example CYTOP® by Asahi Glass.

In a further embodiment of the invention the dense polymeric coating layer is poly(1-trimethyl-silyl-1-propyne) (PTMSP). This polymer has a fractional free volume of 34%.

Additional dense polymers with a high fractional free volume may be used, e.g. a fluorine containing norbornene polymer of the general structure:

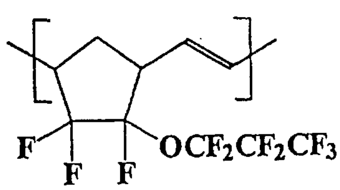

This polymer has a fractional free volume of 26%.

The dense polymeric coating layer has a thickness of 0.01 to 10 μm, most preferably 0.2 to 2 μm.

The carrier layer comprises a porous polymer. It may comprise a polyolefin. In a preferred embodiment the porous polymer is chosen from the group of porous polymers consisting of polyethylene (PE), polypropylene (PP), polyimide (PI), polyether imide (PEI), polyester (PES), polysulfone (PSU) and polyvinylidene difluoride (PVDF). Most preferably the porous plastic is polytetrafluoroethylene (PTFE). Its thickness may be in the range of 5 - 500 μm, preferably 50 - 300 μm.

The porous carrier material has a continuous porous structure wherein innumerable two- or three-dimensional continuous pores are formed in the molded film or tube. The pores may be formed by using a stretching/expanding, foaming or solvent extraction methods. U.S. Patent No. 3,953,566 discloses expanded porous PTFE materials. The porosity and pore size are required to be as large as possible to avoid an additional barrier for the gas diffusion at the same time ensuring that the polymeric coating layer can be applied.
However, in order to reliably allow coating without inhibiting gas permeability, the average pore size may be about 0.02 - 3 μm, preferably 0.1 - 0.5 μm. The porosity may be 30 - 90%, preferably 50 - 80%. Asymetric membranes having a non-uniform pore size throughout the thickness of the porous layer may be used as well.

By porous as used herein is meant a structure of interconnected pores or voids such that continuous passages and pathways throughout the material are provided. Pore size measurements are made by the Coulter Porometer™, manufactured by Coulter Electronics, Inc., Hialeah, Fl. The Coulter Porometer is an instrument that provides automated measurement of pore size distributions in porous media using the liquid displacement method (described in ASTM Standard E1298-89). Porosity is determined by the following equation:

$$\text{porosity} = (1-\rho_m/\rho_t) \times 100\%$$

where $\rho_m$ is the measured density and $\rho_t$ is the theoretical density of the sample.

The layer arrangement, comprising the porous carrier layer and the dense polymeric coating layer may be in the form of flat membranes, tubes or hollow fibres. A layer arrangement comprising membrane tubes is preferred. The manufacture of such tubes may be made according to the disclosure in the US patent 5,565,166. This shall be referred to in more detail hereafter. Hollow fibres may be manufactured for example by extruding a molten polymer or forcing a concentrated polymer solution, also called a dope, through a tube-in-orifice spinerette.

The layer arrangement may be such that part of the dense polymeric coating layer penetrates into the porous space of the porous carrier layer to form a fixed integral bond by an anchoring effect, with the remainder forming a continuous coating on the surface of the porous carrier layer. Preferred methods for forming a dense polymeric coating layer on the porous carrier layer are:

a) If the carrier layer is to be applied to tubes or hollow fibers, then the dense polymeric coating solution may be supplied from a reservoir that is placed at a level above the tube or hollow fiber arrangement (module) and allowed to run via a U-shaped hose into the vertically mounted module. This module is described further hereafter in reference to figure 2. The coating solution fills the tubes gradually from bottom to the top of the module. By this way only the inner surface of the tubes is coated. After the tubes are completely filled and after holding this level for a certain time a 3-way-valve is opened at the bottom part of the U-shaped hose allowing the excess polymer coating solution from the module to drain. At the same time the 3-way-valve blocks coating solution coming from the reservoir.

b) If the carrier layer itself is in the form of a flat membrane, tubes or hollow fibers a thin film of the dense polymeric coating layer may be sprayed on the surface of the flat membranes, membrane tubes or hollow fiber.

c) A film of the dense polymeric coating solution is directly applied on the surface of a flat membrane, tube or hollow fiber by a knife over roll coating.

d) Dip coating is a further method for coating the carrier layer. The carrier layer in the form of a flat membrane, tubes or hollow fiber is dipped in a polymeric coating solution. In this way both surfaces at a time or one surface of the carrier layer can be coated.

e) A dope made of a solution of the raw polymer resin is directly applied to one side of the porous carrier layer, adjusting the viscosity to allow for penetration while simultaneously forming a film.

f) A thin film of the polymer is prepared and bonded to one side of the porous carrier layer, using a dope made of a solution of the polymer with the solvent evaporating through porous carrier layer.

g) A thin film of the polymer is prepared and placed on one side of the porous carrier layer, followed by heat contact bonding via a heat roll or heat press at a temperature above the glass transition point of the polymer and below the heat distortion temperature of the porous carrier layer. After part of the polymer thin film has been anchored in the surface pores of the carrier layer by partial intrusion a cooling step is followed.

The layer arrangement comprising the porous carrier layer and the dense polymeric coating layer may also contain at least one mechanically reinforcing layer according to an additional inventive embodiment. This reinforcing layer serves to increase the strength of the construction, thus extending its usable life in gas separation. The reinforcing layer may be a woven, knitted, nonwoven fabric, a net or a felt. The layer may be made from a metal, e.g. copper, or a polymer, e.g. a polyolefin. The said polymer for the reinforcing layer may be chosen from the group of polymers consisting of polypropylene (PP), polyethylene (PE), polytetrafluoroethylene (PTFE), ethylene-tetrafluoroethylene copolymer (ETFE), polyamide (PA), polyester (PES), polyimide (PI), polyetherimide (PEI) polysulfone (PSU) and polyvinylidene difluoride (PVDF). The reinforcing layer can be applied on either or both sides of the porous carrier layer, i. e. on the coated or uncoated side, as well as between the porous carrier layer and the polymeric coating (before the coating is applied). It is preferably placed on the side of the porous carrier layer facing the gas stream. It is laminated to the layer arrangement by any known method, including e.g. adhesive agents and heat fusion. Bonding is preferably accomplished in a dotted, lined or lattice form, so that the bond does not impair the gas permeability.

The types of gases treated may e.g. include exhaust gas from factories, incineration plants, waste treatment plants, thermal power plants, vehicles etc., as well as natural gas. The gaseous components to be separated may be inorganic or organic gases (including vapours), which are either polar or non-polar. The polar gases to be separated are for example $CO_2$, $SO_2$, $H_2S$, $O_2$, $N_2$, $NO_x$ (nitrogen oxides) and $NH_3$. The organic gaseous components are for example benzene, heptane, formaldehyde and phenol.

The liquid absorbent may be aqueous or miscible with water. In a preferred embodiment it is an aqueous solution of an organic substance. Preferably, the liquid absorbent is an amine when separating $CO_2$ or $H_2S$, which enters into a chemical reaction with these gases. Alkanolamines, such as mono-, di- or triethanolamine, diisopropanolamine, etc. are preferred. Most preferably the alkanolamine is monoethanolamine (MEA) or methyldiethanolamine. Furthermore, the liquid absorbent may be an acid, preferably sulphuric acid when separating $NH_3$. The liquid absorbent may also include sodium hydroxide, potassium hydroxide or a bisulfite. In a further embodiment of the invention the liquid absorbent has a surface tension of less than $60 \times 10^{-3}$ N/m. Although the entire gas stream penetrates the membrane and comes into contact with the liquid absorbent, only the component(s), that is/are to be absorbed, react (s) with the absorbent.

A special advantage of the use of a layer arrangement that prevents permeation by a liquid absorbent to the gas side consists of the reversibility of the chemical reaction between the liquid absorbent and the gas component that takes place in the absorber. Because of this property, a process for desorption with the help of similar devices and procedural steps as are used for the process of the separation of a gas component from a gas stream can be carried out.

Therefore, according to the second aspect of the invention, a process is provided for the desorption of a gas component from the liquid absorbent, in which the liquid absorbent is brought into contact with a layer arrangement on a first side and the gas stream is in contact with a second side opposite to said first side, wherein said layer arrangement has a dense polymeric coating layer with a fractional free volume in the range of 20 - 45% on a porous carrier layer and in which heat energy is supplied to the liquid absorbent at least in the vicinity of the layer arrangement. The dense polymeric coating layer may be on either side of the porous carrier layer, but preferably faces the liquid absorbent. The desorbed gas component is transported away from the side of the layer arrangement that is facing away from the absorbent. Preferably the porous carrier layer and the dense polymeric coating layer are both stable with respect to a temperature of up to approximately 150°C.

The chemical reaction between the liquid absorbent (e.g. mono-ethanolamine) and the gas component that is to be separated (e.g.

$CO_2$ from waste gas) that occurred during the separation can be reversed via the supply of energy. At temperatures that are above the temperature at which the compound, that is formed between the absorbent and the separated gas decomposes again, the gaseous component can be desorbed from the liquid absorbent. This may take place in a desorber module by supplying heat. In the case of an amine absorbent and a $CO_2$ gaseous component, the decomposition temperature for the compound is between 110-130°C. The desorbed gas is then led to a unit for further treatment and may be re-used, for example, as process gas.

According to the third aspect of the invention, the invention provides an apparatus for the separation of one or more gaseous components from a gas stream that is characterized at least by the following features:

a) a gas inlet,
b) a gas outlet,
c) an absorbent inlet,
d) an absorbent outlet, and
e) a layer arrangement having a dense polymeric coating layer with a fractional free volume in the range of 20 - 45% on a porous carrier layer.

The apparatus further comprises a housing and the layer arrangement is preferably enclosed in a module,

further described later on.

The invention also provides for an apparatus for the desorption of a gas component from a liquid absorbent, comprising of at least the following features:

a) an absorbent inlet,
b) an absorbent outlet,
c) a gas outlet,
d) a device for the supply of heat to the absorbent,
e) a layer arrangement having a dense polymeric coating layer with a fractional free volume in the range of 20 - 45% on a porous carrier layer.

Furthermore, a circuit connection may be achieved between the two apparati described above by connecting the absorbent inlets and absorbent outlets of the separation apparatus and those of the desorbtion apparatus. In the case of such an apparatus, use can be made of virtually identically constructed apparati and modules both for the absorber side and for the desorber side.

A preferred example of such a module is an arrangement comprising porous membrane tubes. These are coated with a thin polymer layer either on the inside or on the outside as explained in more detail earlier on. The module comprises porous membrane tubes enclosed in a housing. In a preferred embodiment the porous membrane tubes have the dense coating on the inside of the membrane tube. The ends of the membrane tubes are connected to an absorbent manifold inlet and a manifold outlet, such that the absorbent is located on their interior. The gas mixture containing the gas component that is to be separated is led into the module such that the gas mixture flows around the membrane tubes and the gas mixture penetrates into the membrane. The gaseous component that is to be separated is absorbed by the liquid absorbent.

The absorbent that is loaded with the absorbed gas component is then led to the desorber module and from there it is led through membrane tubes with the same layer arrangement. The desorber module is heated e.g. by the admission of steam on the gas side or with the help of a special heating device to e.g. 120°C (in the case of compound formed from an amine absorbent and a $CO_2$ gas) whereby the $CO_2$ that is released on the liquid side permeates through the membrane to the other side. The gas (in this case $CO_2$) that is generated can then be suctionally removed from the outside of the desorber membrane module, e.g. by means of a vacuum. It can also be removed with the help of a flushing gas, e.g. nitrogen. When, as preferred, the supply of heat takes place by means of steam, the desorbed gas is removed together with the steam. The absorbent, that has been freed from the gas component, then arrives back at the absorber membrane module from the desorber membrane module.

It is also possible to feed the liquid absorbent into the module, such that the liquid absorbent flows around rather than inside the porous membrane tubes, which then preferably have the polymeric coating layer on the outside. In the case of the absorber module the gas mixture is then fed in the interior of the porous membrane tubes.

**Brief Description of the Drawings**

In the following sections, examples of embodiments of the invention are elucidated in further detail on the basis of the drawings. The following aspects are shown:

Figure 1 shows an apparatus for the separation of a gaseous component from a gas stream and for the regeneration of the liquid absorbent that is used for the separation process,

Figure 2 shows a schematic, longitudinal sectional view of a separation module in the form in which it can be used in the apparatus according to Figure 1,

Figure 3 shows a schematic, sectional view through a layer arrangement of a porous carrier layer with a polymeric coating layer according to the invention, and

Figure 4 shows a schematic, sectional view through a layer arrangement including a reinforcing layer.

Detailed Description of the Drawings

The apparatus, that is generally designated by 1 in Figure 1, serves e.g. for the purification of waste gas from a power plant that is operated using fossil fuels. Among other materials, the waste gas may include, for example, approximately 6% of $CO_2$. This waste gas is led via the gas inlet AG1 into a separation membrane module A and leaves from module A via the gas outlet AG2 with a content of only e.g. 1% of CO2.

A mixture comprising of water with 30% monoethanolamine (MEA) is led via the absorbent inlet AF1 into the separation membrane module A and absorbs $CO_2$ as a result of a chemical reaction:

$$CH_2ORCH_2NH_2 + CO_2 + H_2O ==> CH_2ORCH_2\ NH_2 \cdot H_2CO_3.$$

It is led via a connecting line V1 in the form of MEA that is loaded with $CO_2$ from the absorbent outlet AF2 of the separation membrane module A to a desorber membrane module D.

The desorber membrane module D contains the absorbent inlet DF1 and the absorbent outlet DF2. Heat energy Q is supplied to the desorber membrane module D via an energy supply device DQ. In the following example, the heat energy Q is supplied via hot steam. Alternatively, one can provide an electrical heating device or a heating device that is powered in a different matter.

The chemical reaction that takes place in the separation membrane module A is reversed in the desorber membrane module D as a result of the supply of heat energy Q. The reversed chemical reaction separates the $CO_2$ from the $CO_2$ loaded MEA. For this purpose, the desorber membrane module D can be constructed identically to the separation membrane module A which is elucidated below in still more detail. The MEA, that has been liberated from the $CO_2$ as extensively as possible, travels from the absorbent outlet DF2 via the connecting line V2 and the pump P to the absorbent inlet AF1 of the separation membrane module A, as a result of which the absorbent is led in a circular fashion throughout the apparatus.

The $CO_2$ is removed from desorber membrane module D via outlet DG. It can then be processed further.

Figure 2 shows, merely by way of example, a possible form of embodiment for the separation membrane module A and/or the desorber membrane module D.

The module described here is a separation membrane module A. It contains the gas inlet AG1 and the gas outlet AG2 which are placed at diametrically opposite ends of the cylindrical housing 20. The ends of the cylindrical housing 20 are sealed by potted plates 22 and 24, respectively. Means for potting are well known in the industry and not further described herein. The hollow fibers or membrane tubes 25 run from one end of the housing to the other along its axial length. The potted plates 22 and 24 surround the ends of the membrane tubes or hollow fibers in such a way that their interiors are left open for the flow of fluid through them.

In Figure 2, only a few tubes 25 are illustrated in a manner that is representative of a multiplicity of such hollow fibers or tubes. The construction of membrane tubes has already been disclosed in US patent 5,565,166 which is incorporated herein by reference. According to this patent tubes are formed from two flat tapes or sheets of membrane material being placed on top of one another with shaping wires being inserted at intervals between the two membranes and by the subsequent application of heat and pressure. This provides for the formation of tubes running parallel to one another, being linked by bridging cross-pieces or webs.

The dense polymer coating is preferably on the inside of the tubes. It may be applied before or after the formation of the tubes from the membrane. Preferably, the finished tubes are coated.

In this case the membrane tube sheet module A consists of a multiplicity of membrane tube sheets that are arranged parallel to one another and that, in each case, have a multiplicity of tubes 25 that are linked by cross-pieces. The tubes 25 extend in the direction of the axial length of the housing 20 and the tube sheets extend in a plane running in the axial direction of the housing 20 between the first 22 and the second potted plate 24. One or both ends of the membrane tube sheets are embedded in the potted plates 22 and 24 leaving the interiors of the tubes 25 free for the flow of fluid.

Two lids 26 and 27 are connected to the ends of the cylindrical housing 20 and the potted plates 22 and 24 that are located therein. The lids 26 and 27 and the potted plates 22 and 24 form spaces 28 and 29 between them. Lids 26 and 27 have connection attachments that are capable of being connected to hoses or tubular lines for absorbent inlet AF1 and absorbent outlet AF2.

The liquid absorbent may be a mixture comprising of MEA and water. It is supplied via the absorbent inlet AF1 and space 28 into one end of the membrane tubes 25. The absorbent liquid flows through the membrane tubes 25 thereby absorbing most of the $CO_2$ contained in the waste gas. The waste gas is supplied to the interior of the cylindrical housing 20 via the gas inlet AG1 and flows in the opposite direction to the flow direction of the liquid absorbent, to the waste gas outlet AG2. The waste gas containing the CO2 passes across the outer surface of the membrane tubes 25. The flow direction of the liquid absorbent is indicated by the full arrows in the membrane tubes; the flow path of the waste gas is indicated by the dashed arrows. The ends of the membrane tubes 25 that are located on the left in Figure 2 open out into the space 29 and the mixture, comprising of MEA and water, being loaded with $CO_2$, flows out of this space 29 into the absorbent outlet AF2. The waste gas that flows away from the gas outlet AG2 contains only about 1% of $CO_2$. The liquid absorbent that flows away via the outlet AF2 is led into the desorber membrane module via the connecting line V1 that is illustrated in Figure 1.

The desorber membrane module D is constructed similarly to the module that is schematically illustrated in

Figure 2. The liquid absorbent inlet DF1 admits the absorbent loaded with $CO_2$. In this case the module is loaded with steam so that a temperature of more than 110°C prevails inside the housing 20. At this temperature, the chemical reaction that takes place in the absorber membrane module A for the purpose of absorbing the gaseous component, e.g.$CO_2$, is reversed. Desorption of $CO_2$ therefore takes place in the desorber membrane module D. At the gas outlet the desorbed $CO_2$ is removed. A gas inlet may either not be present or is kept closed at this point in time.

Figure 3 shows a sectional view of a construction or layer arrangement according to the invention. The construction that is illustrated in Figure 3 shows the layered arrangement of the tubes 25 that are contained in the module according to Figure 2.

In Figure 3, the construction or layer arrangement 2 comprises a porous carrier layer 4 consisting of e.g. microporous PTFE, having a thickness of approximately 200 μm. The porous carrier layer 4 has a dense coating of a polymer layer 6 having a fractional free volume in the range of 20 - 45% and a thickness of approx. 1μm. The waste gas that is to be freed from the gaseous component e.g. $CO_2$, is indicated by 8. The coating is applied on the side of the porous carrier layer facing the liquid absorbent 10, e.g. a mixture of MEA and water that flows through the interior of the tubes.

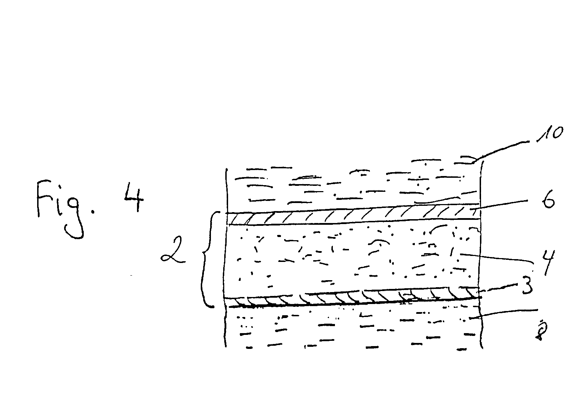

Figure 4 shows the layer arrangement of Figure 3 but including a reinforcing layer 3, e.g. in the form of a polypropylene fabric, on that side of the porous carrier layer 4 facing the waste gas stream 8.

While examples of embodiments of the invention have been elucidated above, a technical expert will understand that the invention is not limited to these special descriptions. The invention can serve not only for the removal of $CO_2$ from waste gases, natural gas, etc. but, rather, it can also serve in the same way for the separation of other gaseous components, e.g. hydrogen sulfide ($H_2S$) with the help of gas/liquid membrane contactors. The absorbent MEA that has been specially indicated above is not to be understood to be limitative, either.

Naturally, the schematically illustrated module in Figure 2 is merely an example of a series of possible module constructions. It is therefore possible to have the gas stream to be treated flow through the tubes with the liquid absorbent flowing on the outside around the tubes, rather than the other way around as illustrated in Figure 2. It is also possible to operate the module with the gas stream and liquid absorbent flowing countercurrently or at perpendicular directions rather than in the same direction. Furthermore, the layer arrangement may also be in the form of flat membranes, rather than tubes, for example.

Examples

Example 1a:

In order to test the process according to the invention, a membrane test bed was assembled using a membrane sheet, as described herein above.

A test cell of the Sepa CF type from the Osmotics company was used for the experiment. In the test cell the membrane sheet was arranged between a liquid circuit transporting a 30% MEA/water solution as the liquid absorbent and a gas circuit, allowing for the flow of the gas stream.

The test cell had an effective membrane surface area of 0.013 $m^2$. The flow of liquid on the side of the liquid absorbent amounted to 120 l/h, at 20 kPa. Circulation was effected in the liquid circuit, that contained MEA, with the help of a pump. The temperature of the solution was adjusted to 30 - 33°C.

The gas mixture was a $CO_2$/air mixture with a $CO_2$ content between 5.5 and 6.5%. The flow volume of the gas through the cell was varied between 60 l/h and 360 l/h at 2 kPa and the gas temperature was adjusted to 30 to 33°C. The relative humidity of the gas varied between 10% and 15%.

In order to measure the $CO_2$ content of the gas mixture after flowing through the test cell, a CO2 analysis apparatus (DRAEGER Polytron IRCO2) was located downstream relative to the test cell. The $CO_2$ proportion was measured using the infrared principle.

After starting up the test experiment, it takes 10 minutes for a constant separation of $CO_2$ to be set up.

The membrane sheet was constructed in the form of a composite membrane consisting of a porous membrane carrier layer and a dense polymeric coating layer. The carrier membrane comprising of microporous ePTFE, obtained from W.L.Gore & Associates GmbH, Germany. The membrane had a porosity of approx. 75%, a thickness of 375μm and a pore size of 0.2 μm. A 1μm thick Teflon AF® 2400 layer was applied thereto. The dense polymeric coating layer was applied in the form of a thin film spread with the help of a defined opening as described above.

The mass transfer coefficient K was calculated in order to obtain a suitable measured value for comparison:

$$K = Q/A \times \ln(X_{in}/X_{out})$$

with Q = gas flow in terms of volume per time; A = membrane surface area; $X_{in}$ = input $CO_2$ concentration and $X_{out}$ =

output $CO_2$ concentration.

Result: K = 1.03 x $10^{-3}$ m/s.

The experiment was carried out in the form of a long-term trials which lasted 30 days. During this period of 30 days, the membrane remained completely dry on the gas side. The mass transfer remained constant.

Example 1b (comparison example);

The same experiment was carried out as in Example 1, wherein an uncoated microporous carrier membrane comprising of ePTFE was used, of the type-as in Example 1 but with a thickness of 35 μm.

K was calculated to be 3.60 x $10^{-3}$ m/s.

After 3 days of contacting with a liquid absorbent pressure of 20 kPa with the 30% MEA/water solution, liquid MEA was found on the gas side in the form of small droplets. After 21 days these liquid droplets formed a coherent liquid film that hindered the throughput of gas and led, finally, to a drastic drop of the K-values to levels to below 0,1 x 10-3 m/s. After 30 days the gas compartment of the module was filled with liquid. This clearly demonstrates that an uncoated membrane cannot be used in separation processes using a liquid absorbent as flooding of the gas compartment will occur, inter alia destroying the permeability of the gaseous components to be separated.

Example 2a:

The same experiment was carried out as in Example 1 a, however a different absorbent and a different gas mixture were used. The liquid absorbent used was a 1 mol solution of $Na_2SO_3$ and the gas mixture consisted of an $SO_2/N_2$ mixture with a $SO_2$ content of 1310 ppm. The flow of the liquid absorbent amounted to 50 l/h. The temperature of the liquid absorbent was adjusted to 22°C.
The flow volume of the gas mixture on the surface of the membrane tubes was 300 l/h, at 1 kPa. The gas temperature was adjusted to 20°C.
The test cell was the same as in Example 1a.

The membrane was constructed in the form of a composite membrane consisting of the same carrier layer comprising microporous ePTFE as in Example 1a with a 1 μm thick Teflon AF® 2400 layer applied thereto. The membrane surface area was 0.013 $m^2$ and the liquid absorbent pressure was 20 kPa.

In order to measure the $SO_2$ content of the gas mixture after flowing through the test cell, a $SO_2$ analysis apparatus (Hartmann + Braun, Type URAS 3E) was used. Before analysis the water vapor was removed from the gas by a condensator.

The mass transfer coefficient K was calculated in the same way as in Example 1a. The experiment was carried out on two different membranes with different carrier layer thicknesses. During a period of 30 days the membrane on the gas side remained completely dry and the mass transfer values remained constant.
The results of the two experiments were:

K1 = 3.1x$10^{-3}$ m/s for a carrier layer thickness of 375 μm
K2 = 5.4x$10^{-3}$ m/s for a carrier layer thickness of 35 μm.

Example 2b (comparison example):

The same experiment was carried out as in Example 2a, only with a different material being used for the membrane A microporous carrier layer comprising of polyetherimidie (PEI) with a nitrogen-permeability of 200$m^3$/$m^2$bar, obtained from GKSS Forschungszentrum Geesthacht GmbH, Germany, with a 1 μm thick polydimethylsiloxane (PDMS) coating having a fractional free volume < 20% applied thereto.
A K-value of 2x$10^{-4}$ m/s was determined.
This shows that a dense polymer coating having a fractional free volume below 20% has a far lower mass transfer value, i.e. a far lower permeability for the gaseous components than a coating with a fractional free volume greater than 20%.

Example 3a

A porous PTFE membrane with an average pore size of 0.2 μm, a thickness of 40 μm and a porosity of 80% was prepared by stretching the membrane in the biaxial direction according to U.S. Patent No. 3,953,566. A solution containing 1 part by weight of a polymer having a fractional free volume in the range of 20 - 45%, Teflon AF® 2400, obtainable from Dupont, was dissolved in 49 parts by weight of solvent (Fluorinert FC-75, obtainable from 3M). The porous membrane carrier layer was coated on one side by roll coating and then dried in an oven at 150°C for 5 minutes,

to produce a layered construction with dry thicknesses of the coating of 1 µm, 3 µm and 5 µm.

The experiment was carried out in a test cell including the gas separating membrane. In the test cell a liquid absorbent (100% solution of MEA) was circulated with a pump on the side of the separating membrane on which the dense polymeric coating layer is formed, while the gas to be processed was allowed to flow on the opposite side. The gas components to be separated were absorbed and removed as they migrated through the gas separating membrane to the side of the liquid absorbent.

A 100% solution of MEA was circulated at a rate of 30 l/h, with a gas stream being introduced into the test cell, containing 20% $CO_2$, at a flow rate of 12 l/h.

Table 1 shows the results of measuring the migration rate of the $CO_2$ in the mixed gas stream toward the liquid absorbent and the absorbtion removal efficiency. An example where the porous PTFE membrane alone is used with no polymer coating is shown as a control for comparison. The $CO_2$ removal performance is shown as a relative value with 100% being the removal performance of the membrane coated with a thickness of 0 µm. The gas permeation measuring apparatus used was a "Model GTR-10" manufactured by Yanagimoto Seisakusho.

Table 1

| Teflon AF 2400 thickness (µm) | wetting inhibition | CO2 permeability ($m^3/cm^2$ x s x cmHg) | CO2 removal performance (%) |
|---|---|---|---|
| 0 (control) | poor | 33.0 | 100 |
| 5 (example) | good | $104.3x10^{-5}$ | 18 |
| 3 (example) | good | $200.4 \times 10^{-5}$ | 30 |
| 1 (example) | good | $580 \times 10^{-5}$ | 50 |

As is clearly shown in Table 1, the membrane with no polymer coating had a high $CO_2$ gas permeation but liquid permeation of the MEA solution could not be prevented and thus it was unsuitable for the purpose of the invention.

<u>Example 3b</u>

Another experiment was conducted as in Example 3a, however using a porous polypropylene membrane, made porous by biaxial stretching after film formation, with a thickness of 50 µm, an average pore size of 0.2 µm and a porosity of 50%. The porous membrane carrier layer was coated with Teflon AF® 2400 on one side by roll coating and then dried in an oven at 150°C for 5 minutes to produce a layered construction with dry thicknesses of the coating of 1 µm, 3 µm and 5 µm.
The results are shown in Table 2.

Table 2

| Teflon AF 2400 thickness (µm) | wetting inhibition | $CO_2$ permeability ($m^3/cm^2$ x s x cmHg) | $CO_2$ removal performance (%) |
|---|---|---|---|
| 0 (control) | poor | 0,82 | 100 |
| 5 (example) | good | $51.6x10^{-5}$ | 10 |
| 3 (example) | good | $102.0x10^{-5}$ | 22 |
| 1 (example) | good | $248x10^{-5}$ | 35 |

The results in Table 2 show similarly high permeabilities as when a carrier layer of porous ePTFE was used.

## Claims

1. Process for the separation of one or more gaseous components from a gas stream using a liquid absorbent, in which the gas stream (8) is brought into contact with a layer arrangement (2) on a first side and the liquid absorbent (10) is in contact with a second side opposite to said first side, wherein said layer arrangement (2) has a dense polymeric coating layer (6) with a fractional free volume in the range of 20 - 45% on a porous carrier layer (4).

2. Process for the desorption of a gas component from a liquid absorbent, in which the liquid absorbent (10) is brought

into contact with a layer arrangement (2) on a first side and the gas stream (8) is in contact with a second side opposite to said first side, wherein said layer arrangement (2) has a dense polymeric coating layer (6) with a fractional free volume in the range of 20 - 45% on a porous carrier layer (4) and in which heat energy (Q) is supplied to the liquid absorbent (10) at least in the vicinity of the layer arrangement (2).

**3.** Process according to Claim 1, wherein the dense polymeric coating layer (6) is applied on the side of the carrier layer (4) facing the liquid absorbent (10).

**4.** Process according to Claim 2, wherein the dense polymeric coating layer (6) is applied on the side of the carrier layer (4) facing the liquid absorbent (10).

**5.** Process according to one of Claims 1 to 4, wherein the dense polymeric coating layer (6) is a perfluorodioxole copolymer.

**6.** Process according to Claim 5, wherein the perfluorodioxole copolymer is of the general structure:

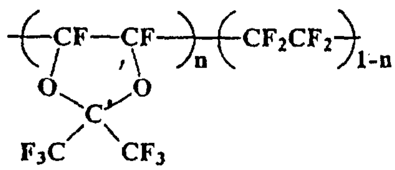

**7.** Process according to Claim 6, wherein the perfluorodioxole copolymer contains 87 mol% 2,2-bis-trifluoromethyl-4,5-difluoro-1,3-dioxole (PDD) and 13 mol% polytetrafluoroethylene (PTFE).

**8.** Process according to one of Claims 1 to 4, wherein the polymeric coating layer (6) is poly(1-trimethyl-silyl-1-propyne) (PTMSP).

**9.** Process according to one of Claims 1 to 4, wherein the polymeric coating layer (6) is a fluorine containing norbornene polymer.

**10.** Process according to one of Claims 1 to 9, wherein the dense polymeric coating layer (6) has a thickness of 0.01 to 10 μm.

**11.** Process according to Claim 10, wherein the dense polymeric coating layer (6) has a thickness of 0,2 - 2 μm.

**12.** Process according to one of Claims 1-11, wherein the porous carrier layer (4) is a porous polymer.

**13.** Process according to Claim 12, wherein the porous polymer is chosen from the group consisting of polyethylene (PE), polypropylene (PP), polyimide (PI), polyetherimide (PEI), polyester (PES), polysulfone (PSU), polytetrafluoroethylene (PTFE) and polyvinylidene diflouride (PVDF).

**14.** Process according to Claim 13, wherein the porous polymer is expanded polytetrafluoroethylene (ePTFE).

**15.** Process according to one of Claims 1 to 14, wherein the coated porous carrier layer (4) contains at least one additional reinforcing layer (3), being present on either side of the coated porous carrier layer (4) or between the porous carrier layer (4) and the dense polymeric coating layer (6).

**16.** Process according to Claim 15, wherein the reinforcing layer (3) is chosen from the group consisting of a woven, knitted, nonwoven fabric, a net or a felt.

**17.** Process according to one of Claims 15 to 16, wherein the reinforcing layer (3) is a polymer or a metal.

**18.** Process according to one of Claims 1 to 17, wherein the gaseous components that are to be separated are polar

and chosen from the group of gaseous components consisting of $CO_2$, $SO_2$, $H_2S$, $O_2$, $N_2$, $NO_x$ and $NH_3$.

**19.** Process according to one of Claims 1 to 17, wherein the gaseous components that are to be separated are organic and chosen from the group of gaseous components consisting of benzene, heptane, formaldehyde and phenol.

**20.** Process according to one of Claims 1 to 19, wherein the liquid absorbent (10) is an aqueous solution of an organic substance.

**21.** Process according to Claim 20, wherein the organic substance is an amine.

**22.** Process according to Claim 21, wherein the organic substance is monoethanolamine or methyldiethanolamine.

**23.** Process according to one of Claims 1 to 22, wherein the liquid absorbent (10) enters into a chemical reaction with the gaseous component that is to be separated.

**24.** Process according to one of Claims 1 to 23, wherein the layer arrangement (2) is in the form of flat membranes, tubes or hollow fibres.

**25.** Apparatus for the separation of one or more gaseous components from a gas stream (8), comprising of:

a) a gas inlet (AG1);
b) a gas outlet (AG2);
c) an absorbent inlet (AF1);
d) an absorbent outlet (AF2); and
e) a layer arrangement (2) having a dense polymeric coating layer (6) with a fractional free volume in the range of 20 - 45% and a porous carrier layer (4)

**26.** Apparatus for the desorption of a gas component from a liquid absorbent (10), comprising of:

a) an absorbent inlet (DF1);
b) an absorbent outlet (DF2);
c) a gas outlet (DG);
d) a device (DQ) for the supply of heat to the absorbent,
e) a layer arrangement (2) having a dense polymeric coating layer (6) with a fractional free volume in the range of 20 - 45% and a porous carrier layer (4)

**27.** Apparatus according to Claim 25 and 26, in which a circuit is formed by connecting the absorbent inlets and absorbent outlets of the separation apparatus (A) and those of the desorption apparatus (D).

**28.** Apparatus according to one of Claims 25 to 27, wherein the layer arrangement (2) is in the form of flat membranes, tubes or hollow fibres (25).

**Patentansprüche**

**1.** Verfahren zum Trennen einer oder mehrerer Gaskomponenten aus einem Gasstrom unter Verwendung eines flüssigen Absorptionsmittels, bei dem der Gasstrom (8) in Berührung mit einer Schichtanordnung (2) auf einer ersten Seite und das flüssige Absorptionsmittel (10) in Berührung mit einer der ersten Seite abgewandten zweiten Seite gebracht wird, wobei die Schichtanordnung (2) eine dichte Polymer-Überzugschicht (6) mit einem anteiligen Freivolumen im Bereich von 20 - 45% auf einer porösen Trägerschicht (4) aufweist.

**2.** Verfahren zum Desorbieren einer Gaskomponente aus einem flüssigen Absorptionsmittel, bei dem das flüssige Absorptionsmittel (10) in Berührung mit einer Schichtanordnung (2) auf deren erster Seite und der Gasstrom (8) in Berührung mit einer der ersten Seite abgewandten zweiten Seite gebracht wird, wobei die Schichtanordnung (2) eine dichte Polymer-Überzugschicht (6) mit einem anteiligen Freivolumen im Bereich von 20 - 45% auf einer porösen Trägerschicht (4) aufweist, und wobei dem flüssigen Absorptionsmittel (10) zumindest in der Nähe der Schichtanordnung (2) Wärmeenergie (Q) zugeführt wird.

**3.** Verfahren nach Anspruch 1, bei dem die dichte Polymer-Überzugschicht (6) auf derjenigen Seite der Trägerschicht (4) angebracht ist, die dem flüssigen Absorptionsmittel (10) zugewandt ist.

**4.** Verfahren nach Anspruch 2, bei dem die dichte Polymer-Überzugschicht (6) auf derjenigen Seite der Trägerschicht (4) angebracht ist, die dem flüssigen Absorptionsmittel (10) zugewandt ist.

**5.** Verfahren nach einem der Ansprüche 1 bis 4, bei dem die dichte Polymer-Überzugschicht (6) ein Perfluordioxol-Copolymer ist.

**6.** Verfahren nach Anspruch 5, bei dem das Perfluordioxol-Copolymer folgende allgemeine Struktur besitzt:

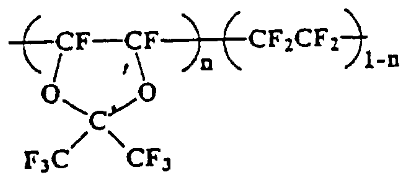

**7.** Verfahren nach Anspruch 6, bei dem das Perfluordioxol-Copolymer 87 Mol.-% 2,2-bis-trifluormethyl-4,5-difluor-1,3-dioxol (PDD) und 13 Mol.-% Polytetrafluorethylen (PTFE) enthält.

**8.** Verfahren nach einem der Ansprüche 1 bis 4, bei dem die Polymer-Überzugschicht (6) Poly(1-trimethyl-silyl-1-propyn) (PTMSP) ist.

**9.** Verfahren nach einem der Ansprüche 1 bis 4, bei dem die Polymer-Überzugschicht (6) ein Fluor enthaltendes Norbornen-Polymer ist.

**10.** Verfahren nach einem der Ansprüche 1 bis 9, bei dem die dichte Polymer-Überzugschicht (6) eine Dicke von 0,01 bis 10 µm aufweist.

**11.** Verfahren nach Anspruch 10, bei dem die dichte Polymer-Überzugschicht (6) eine Dicke von 0,2 - 2 µm besitzt.

**12.** Verfahren nach einem der Ansprüche 1 bis 11, bei dem die poröse Trägerschicht (4) ein poröses Polymer ist.

**13.** Verfahren nach Anspruch 12, bei dem das poröse Polymer ausgewählt ist aus der Gruppe Polyethylen (PE), Polypropylen (PP), Polyimid (PI), Polyetherimid (PEI), Polyester (PES), Polysulfon (PSU), Polytetrafluorethylen (PTFE) und Polyvinyliden-difluorid (PVDF).

**14.** Verfahren nach Anspruch 13, bei dem das poröse Polymer expandiertes Polytetrafluorethylen (ePTFE) ist.

**15.** Verfahren nach einem der Ansprüche 1 bis 14, bei dem die überzogene poröse Trägerschicht (4) mindestens eine zusätzliche Verstärkungsschicht (3) enthält, die sich auf der einen oder der anderen Seite der beschichteten porösen Trägerschicht (4) oder zwischen der porösen Trägerschicht (4) und der dichte Polymer-Überzugschicht (6) befindet.

**16.** Verfahren nach Anspruch 15, bei dem die Verstärkungsschicht (3) ausgewählt ist aus der Gruppe Web-, Strick-, ungewebter Stoff, Netz oder Filz.

**17.** Verfahren nach einem der Ansprüche 15 bis 16, bei dem die Verstärkungsschicht (3) ein Polymer oder ein Metall ist.

**18.** Verfahren nach einem der Ansprüche 1 bis 17, bei dem die zu separierenden Gaskomponenten polar sind und ausgewählt sind aus der Gruppe gasförmiger Komponenten, die aus $CO_2$, $SO_2$, $H_2S$, $O_2$, $N_2$, $NO_x$ und $NH_3$ besteht.

**19.** Verfahren nach einem der Ansprüche 1 bis 17, bei dem die zu separierenden Gaskomponenten organisch sind und ausgewählt sind aus der Gruppe gasförmiger Komponenten, die aus Benzol, Heptan, Formaldehyd und Phenol besteht.

**20.** Verfahren nach einem der Ansprüche 1 bis 19, bei dem das flüssige Absorptionsmittel (10) eine wässrige Lösung einer organischen Substanz ist.

**21.** Verfahren nach Anspruch 20, bei dem die organische Substanz ein Amin ist.

**22.** Verfahren nach Anspruch 21, bei dem die organische Substanz Monoethanolamin oder Methyldiethanolamin ist.

**23.** Verfahren nach einem der Ansprüche 1 bis 22, bei dem das flüssige Absorptionsmittel (10) eine chemische Reaktion mit der zu separierenden Gaskomponente eingeht.

**24.** Verfahren nach einem der Ansprüche 1 bis 23, bei dem die Schichtanordnung (2) die Form flacher Membranen, Schläuche oder hohler Fasern hat.

**25.** Vorrichtung zum Separieren einer oder mehrerer Gaskomponenten aus einem Gasstrom (8), umfassend:

a) einen Gaseinlaß (AG1);
b) einen Gasauslaß (AG2);
c) einen Absorptionsmittel-Einlaß (AF1);
d) einen Absorptionsmittel-Auslaß (AF2); und
e) eine Schichtanordnung (2) mit einer dichten Polymer-Überzugschicht (6) mit einem anteiligen Freivolumen im Bereich von 20 - 45% und einer porösen Trägerschicht (4).

**26.** Vorrichtung zur Desorption einer Gaskomponente aus einem flüssigen Absorptionsmittel (10), umfassend:

a) einen Absorptionsmittel-Einlaß (DF1);
b) einen Absorptionsmittel-Auslaß (DF2);
c) einen Gasauslaß (DG);
d) eine Vorrichtung (DQ) für die Zufuhr von Wärme zu dem Absorptionsmittel;
e) eine Schichtanordnung (2) mit einer dichten Polymer-Überzugschicht (6), die ein anteiliges Freivolumen im Bereich von 20 - 45% besitzt, und einer porösen Trägerschicht (4).

**27.** Vorrichtung nach Anspruch 25 und 26, bei der durch Verbinden der Absorptionsmittel-Einlässe und -Auslässe der Separiervorrichtung (A) mit jenen der Desorptionsvorrichtung (D) ein Kreislauf gebildet ist.

**28.** Vorrichtung nach einem der Ansprüche 25 bis 27, bei der die Schichtanordnung (2) die Form flacher Membranen, Schläuche oder hohler Fasern (25) hat.

## Revendications

**1.** Procédé pour la séparation de un ou de plus d'un composant gazeux à partir d'un courant de gaz, en utilisant un absorbant liquide, dans lequel le courant de gaz (8) est mis en contact avec un agencement en couches (2) sur un premier côté et l'absorbant liquide (10) est en contact avec le second côté opposé audit premier côté, ledit agencement en couches (2) ayant une couche de revêtement polymère dense (6) présentant un volume fractionnaire libre dans la gamme de 20 à 45 % sur une couche support poreuse (4).

**2.** Procédé pour la désorption d'un composant gazeux, à partir d'un absorbant liquide, dans lequel l'absorbant liquide (10) est mis en contact avec un agencement en couches (2) sur un premier côté et le courant gazeux (8) est en contact avec un second côté opposé audit premier côté, ledit agencement en couches (2) possédant une couche de revêtement polymère dense (6) présentant un volume fractionnaire libre dans la gamme de 20 à 45 % sur une couche support poreuse (4) tandis que de l'énergie thermique (Q) est fournie à l'absorbant liquide (10) au moins au voisinage de l'agencement en couches (2).

**3.** Procédé selon la revendication 2, dans lequel la couche de revêtement polymère dense (6) est appliquée sur le côté de la couche support (4) faisant face à l'absorbant liquide (10).

**4.** Procédé selon la revendication 2, dans lequel la couche de revêtement polymère dense (6) est appliquée sur le côté de la couche support (4) faisant face à l'absorbant liquide (10).

**5.** Procédé selon l'une des revendications 1 à 4, dans lequel la couche de revêtement polymère dense (6) est en copolymère de type perfluorodioxole.

**6.** Procédé selon la revendication 5, dans lequel le copolymère de type perfluorodioxole présente la structure générale :

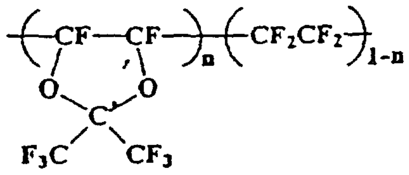

**7.** Procédé selon la revendication 6, dans lequel le copolymère de type perfluorodioxole renferme 87 % molaire de 2,2-bis-trifluorométhyl-4,5-difluoro-1,3-dioxole (PDD) et 13 % molaire de polytétrafluoroéthylène (PTFE).

**8.** Procédé selon l'une des revendications 1 à 4, dans lequel la couche de revêtement polymère (6) est du poly (1-triméthyl-silyl-1-propyne) (PTMSP).

**9.** Procédé selon l'une des revendications 1 à 4, dans lequel la couche de revêtement polymère (6) est un polymère de type norbornène renfermant du fluor.

**10.** Procédé selon l'une des revendications 1 à 9, dans lequel la couche de revêtement polymère dense (6) présente une épaisseur de 0,01 à 10 µm.

**11.** Procédé selon la revendication 10, dans lequel la couche de revêtement polymère dense (6) présente une épaisseur de 0,02 à 2 µm.

**12.** Procédé selon l'une des revendications 1 à 11, dans lequel la couche support poreuse (4) est un polymère poreux.

**13.** Procédé selon la revendication 12, dans lequel le polymère poreux est choisi dans le groupe constitué du polyéthylène (PE), du polypropylène (PP), du polyimide (PI), du polyétherimide (PEI), du polyester (PES), de la polysulfone (PSU), du polytétrafluoroéthylène (PTFE) et du difluorure de polyvinylidène (PVDF).

**14.** Procédé selon la revendication 13, dans lequel le polymère poreux est un polytétrafluoroéthylène expansé (ePTFE).

**15.** Procédé selon l'une des revendications 1 à 14, dans lequel la couche support poreuse appliquée (4) renferme au moins une couche supplémentaire de renforcement (3), qui se trouve sur l'un des côtés de la couche support poreuse appliquée (4)ou entre la couche support poreuse (4) et la couche de revêtement polymère dense (6).

**16.** Procédé selon la revendication 15, dans lequel la couche de renforcement (3) est choisie dans le groupe constitué d'un tissu tissé, tricoté ou non tissé, d'un treillis ou d'un feutre.

**17.** Procédé selon l'une des revendications 15 à 16, dans lequel la couche de renforcement (3) est un polymère ou un métal.

**18.** Procédé selon l'une des revendications 1 à 17, dans lequel les composants gazeux, qui doivent être séparés, sont polaires et choisis dans le groupe des composants gazeux constitués du $CO_2$, du $SO_2$, du $H_2S$, de l'$O_2$, du $N_2$, des $NO_x$ et du $NH_3$.

**19.** Procédé selon l'une des revendications 1 à 17, dans lequel les composants gazeux, qui doivent être séparés, sont organiques et choisis dans le groupe des composants gazeux constitués du benzène, de l'heptane, du formaldéhyde et du phénol.

**20.** Procédé selon l'une des revendications 1 à 19, dans lequel l'absorbant liquide (10) est une solution aqueuse d'une substance organique.

**21.** Procédé selon la revendication 20, dans lequel la substance organique est une amine.

**22.** Procédé selon la revendication 21, dans lequel la substance organique est une mono-éthanolamine ou une méthyldiéthanolamine.

**23.** Procédé selon l'une des revendications 1 à 22, dans lequel l'absorbant liquide (10) entre dans une réaction chimique avec le composant gazeux qui doit être séparé.

**24.** Procédé selon l'une des revendications 1 à 23, dans lequel l'agencement en couches (2) est sous la forme de membranes plates, de tubes ou de fibres creuses.

**25.** Appareil pour la séparation d'un ou de plus d'un composant gazeux à partir d'un courant gazeux (8), constitué de :

a) une arrivée de gaz (AG1) ;
b) une sortie de gaz (AG2) ;
c) une arrivée d'absorbant (AF1) ;
d) une sortie d'absorbant (AF2) ; et
e) un agencement en couches (2) ayant une couche de revêtement polymère dense (6), présentant un volume fractionnaire libre dans la gamme de 20 à 45 % et une couche support poreuse (4).

**26.** Appareil pour la désorption d'un composant gazeux à partir d'un absorbant liquide (10), constitué de :

a) une entrée d'absorbant (DF1) ;
b) une sortie d'absorbant (DF2) ;
c) une sortie de gaz (DG) ;
d) un dispositif (DQ) pour l'alimentation en chaleur de l'absorbant ; et
e) un agencement en couches (2) ayant une couche de revêtement polymère dense (6), présentant un volume fractionnaire libre dans la gamme de 20 à 45 % et une couche support poreuse (4).

**27.** Appareil selon la revendication 25 et la revendication 26, dans lequel un circuit est formé en connectant les arrivées d'absorbant et les sorties d'absorbant de l'appareil de séparation (A) et celles de l'appareil de désorption (D).

**28.** Appareil selon l'une des revendications 25 à 27, dans lequel l'agencement en couches (2) est sous la forme de membranes plates, de tubes ou de fibres creuses (25).

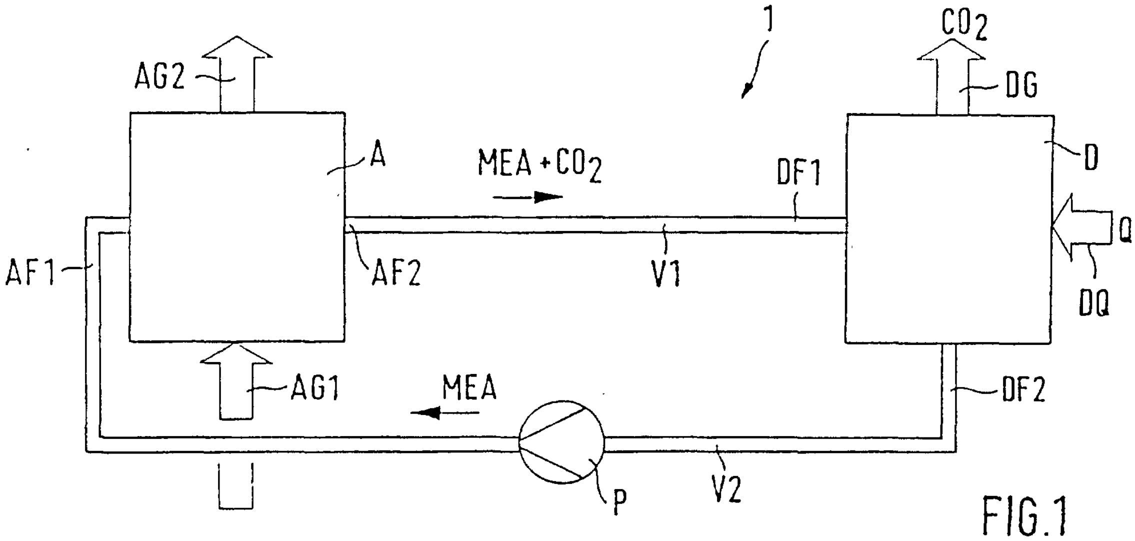


FIG.1

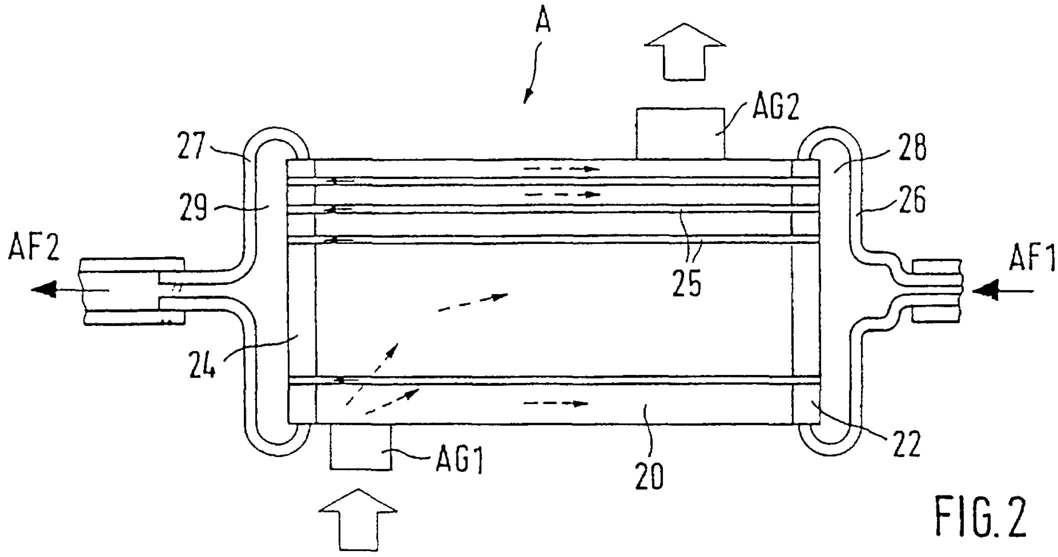


FIG.2

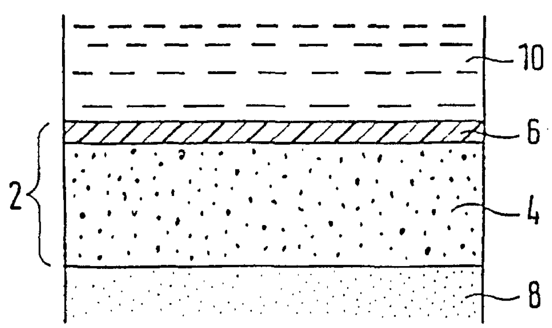


FIG.3

Fig. 4